Europäisches Patentamt

European Patent Office

Office européen des brevets

(11) Publication number: **0 047 660**
**A1**

(12) ## EUROPEAN PATENT APPLICATION

(21) Application number: **81304082.1**

(22) Date of filing: **07.09.81**

(51) Int. Cl.³: **G 01 P 15/09**

(30) Priority: **06.09.80 GB 8028847**

(43) Date of publication of application: **17.03.82**
**Bulletin 82/11**

(84) Designated Contracting States: **AT BE CH DE FR GB IT LI LU NL SE**

(71) Applicant: **Kellett, Peter, 33, High Street Graveley, Hitchin Hertfordshire (GB)**
Applicant: **Kellett, Michael Andrew, 33, High Street Graveley, Hitchin Hertfordshire (GB)**

(72) Inventor: **Kellett, Peter, 33, High Street Graveley, Hitchin Hertfordshire (GB)**
Inventor: **Kellett, Michael Andrew, 33, High Street Graveley, Hitchin Hertfordshire (GB)**

(74) Representative: **Thomson, Roger Bruce et al, POLLAK MERCER & TENCH High Holborn House 52-54 High Holborn, London WC1V 6RY (GB)**

(54) **Accelerometers.**

(57) An accelerometer which uses a piezoelectric element (34) which has flat faces on opposite sides thereof and which is mounted on a support (38) is characterised firstly by the piezoelectric element being mounted with one flat face (36) bonded to the support plate and the other flat face (40) free so that it operates as a radial expander when subjected to axial forces, and secondly by an electrical contact element (46) extending through a bore (48) through the support plate (38) and the piezoelectric element (34) and being connected to the flat face (40) of the piezoelectric element remote from the support plate (38). The support for the piezoelectric element is preferably a plate (42) integral with a central post (44). The contact wire (46) is held rigid and is protected by the other component parts, and the mounting of the piezoelectric element itself reduces the base strain sensitivity of the device.

- 1 -

ACCELEROMETERS

SPECIFICATION

This invention relates to accelerometers, and is concerned with such devices which incorporate a piezoelectric element as a transducer to convert a stress exerted on the element, e.g. as a result of shock or vibration, into an electrical output signal.

The present invention is particularly concerned with improved ways of making electrical connections to the piezoelectric element which constitutes an essential component of present day accelerometers.

The invention is concerned with accelerometers which comprise a housing and a piezoelectric element which has flat faces on opposite sides thereof and which is mounted within the housing on a support.

Various accelerometers of this general type are known. However, the majority of these are constructed so that the piezoelectric element is under compression or functions in an axial shear mode. Examples of such accelerometers are to be found in FR 2116922, GB 1140431 and DE 2047387. In each of these known accelerometers the construction of the device is complex, involving the assembly of a relatively large number of component parts under compression and to a very high degree of accuracy. The pieceparts must be machined to a very high degree of accuracy, and the devices are therefore relatively expensive and time-consuming to make.

Another known accelerometer is described in US 3612921, and here again the piezoelectric element is subjected to compression by the use of relatively complex clamping and retaining means. In this known accelerometer the mounting of the piezoelectric element is rigidly secured to a base member by a retaining screw which clamps the inner circumferential portion of the annular piezoelectric element. Electrodes are then conductively coupled to the two opposite flat faces of the piezoelectric element. This involves the use of a conductive washer held under the head of the screw, and connected to a lead-out wire which extends through free space within the housing of the device. This known arrangement is again relatively complex in construction, has the piezoelectric crystal under compression , and has relatively poor sensitivity.

In yet another known device, as described in the Journal of the Acoustical Society of America, Volume 63, February 1978, Page 628, use is again made of a central clamping bolt to put the piezoelectric element under compression, but here, as in many other accelerometers, the connecting wire is fixed to one face of the crystal and the wire is then led away over the face of the crystal and down and out through the housing. Such an arrangement especially involves problems in assembling the device, and also in avoiding spurious effects in operation.

It is an object of the present invention to provide an improved accelerometer in which the piezoelectric element is operated as a radial expander, instead of being put under compression, and in which a novel way is used of making electrical contact to the piezoelectric element whereby the connecting wire is held rigidly by the structural components of the device themselves.

It is a further object of the present invention to provide an accelerometer in which the piezoelectric element itself is mounted in a way which, in combination with the improved electrical connection, reduces the base strain sensitivity of the accelerometer, i.e. reduces the sensitivity to deformations transmitted through the base of the accelerometer to the piezo electric element.

In accordance with the present invention there is provided an accelerometer comprising a housing and a piezoelectric element which has flat faces on opposite sides thereof and which is mounted within the housing on a support, characterised in that the support comprises a plate and the piezoelectric element is mounted with one flat face bonded to the plate and the other flat face free so that the piezoelectric element functions as a radial expander when subjected to forces exerted in a direction perpendicular to said faces, and in that electrical connection to the piezoelectric element is effected by way of an electrical contact element which extends through a hole through the support plate and the piezoelectric element and which is connected to said other flat face of the piezoelectric element remote from the support plate.

If the piezoelectric element is a circular disc, then the contact element preferably extends through a hole formed in the centre of the disc. The contact element may be for example a rigid contact pin, of a fixedly-held contact wire.

In a preferred embodiment of the invention, the support plate is electrically conductive and is mounted on or is integral with a central boss through which the contact element extends axially.

In order to obtain maximum response and sensitivity with this form of centre-mounted assembly, it has been found desirable for the ratio of the diameter of the piezoelectric element to the diameter of the central boss to be approximately 10 to 3.

Additionally, the diameter of the support plate is preferably greater than the diameter of the piezoelectric element.

Although in most embodiments of accelerometer in accordance with the present invention it is preferred to have the electrical contact element extending from the hole through the piezoelectric element axially out of the housing of the accelerometer, in an alternative arrangement, the contact element is led out through a side wall of the housing. This latter arrangement can facilitate the connection of the accelerometer to associated circuitry in certain circumstances, especially where the accelerometer is to be mounted in a restricted space.

Preferably, the housing is a multi-part housing, primarily for ease of assembly, with the housing parts being fixedly secured together as part of the assembly process.

The accelerometer of the present invention is particularly suitable for use in detecting knock in internal combustion engines. As more car manufacturers go over to electronic ignition systems, there is an increasing demand for accelerometers which can detect knock before it becomes audible. The accelerometer of the present invention is particularly suited to use in the environment of an internal combustion engine, largely due to its low sensitivity to base strain. However, it should be understood that the accelerometer of the present invention is not limited to this particular use and is widely applicable to a range of working situations.

In order that the invention may be fully understood, a number of embodiments of accelerometer in accordance with the invention will now be described by way of example and with reference to the accompanying drawings, in which:

Fig. 1 is an axial sectional view through a first embodiment of accelerometer in accordance with the invention;

Fig. 2 is an axial sectional view through a second, simplified embodiment of accelerometer in accordance with the invention; and,

Fig. 3 is an exploded view of the housing and mounting arrangement of a third embodiment of accelerometer in accordance with the invention, illustrating in particular the assembly of the multi-part housing.

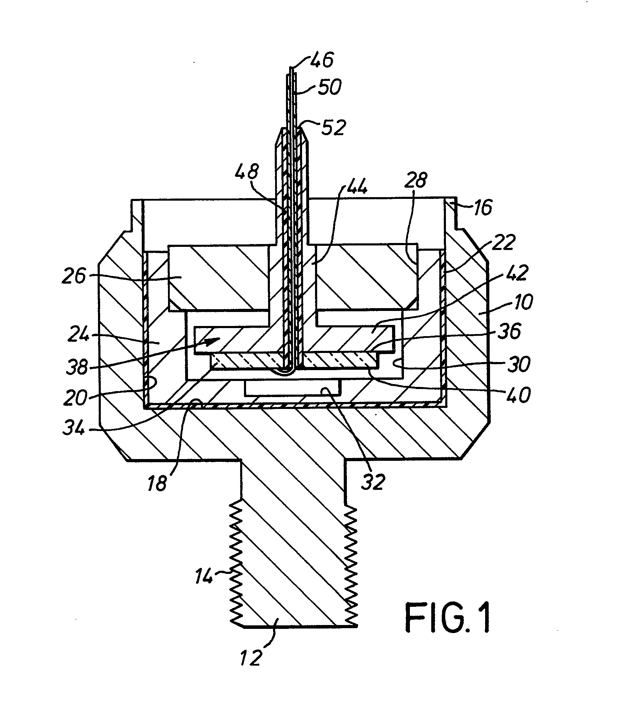

Referring first to Fig. 1, the accelerometer comprises a base 10, for example of steel, which is generally cup-shaped and includes an integral mounting stud 12 which has an external screw thread 14 to enable the base to be fitted to an object under test. In an alternative embodiment, the cup-shaped base 10 can be provided with a threaded recess into which a separate threaded stud can be screwed. The cup-shaped base has a hexagonal external configuration to enable it to be tightened into position with a spanner. Above the hexagonal portion of the base 10 there is an upstanding annular flange 16. The cup-shaped base 10 defines a cylindrical recess having a flat smooth bottom wall 18 and a circumferential wall 20.

The bottom wall 18 and the circumferental wall 20 of the recess in the base are lined with a thin layer 22 of electrically insulating material. The base 10 carries a two-part accelerometer body consisting of a body cup 24 and a body disc 26. These are preferably both of steel. Preferably, the base 10 is a heat shrink fit on to the body 24, 26.   The body cup 24 has a cylindrical bore wall 28, a cylindrical counterbore wall 30, and a central bottom recess 32.   The body disc 26 is a drive fit into the upper end of the body cup 24 and is provided with a chamfer around its lower peripheral margin.

A piezoelectric element 34 in the form of an annular disc has one flat face 36 bonded to a correspondingly flat face of an electrically conductive metal support 38.   The opposite flat face 40 of the piezoelectric element remains free.   The support 38 comprises a cylindrical plate portion 42 and an integral axially extending shaft portion 44.   This shaft portion 44 has a first region of relatively large diameter which is a drive fit in the body disc 26, and a second portion of relatively smaller diameter which extends axially above the body disc 26.   The piezoelectric element 34 is bonded to the mounting support 38 by glueing, soldering, or any other appropriate method.   The support 38 may be of brass.

As is well understood in this art, vibrations in the vicinity of the mounting stud 12 cause movements which result in strains in the piezoelectric element, which causes electrical charges to be generated at the opposite flat faces 36 and 40 of the piezoelectric element. Electrical connection to the upper face 36 of the piezoelectric element is effected through the metallic and therefore electrically conductive  support 38, and body 24, 26.   On the other hand, electrical connection to the free face 40 of the piezoelectric element 34 is effected by way of an electrical contact wire 46 which extends axially down through a central bore 48 in the support 38, and through a central hole in the piezoelectric element 34.   The end of the contact wire 46 is glued, soldered or otherwise fixedly secured to the free face 40 of the piezoelectric element.   It will thus be appreciated that the point of contact between the end of the wire and the piezoelectric disc is a relatively small area contact in comparison with the overall area of the face 40 of the element. Instead of fixing the tip of the wire directly to the face 40 of the piezoelectric element, it may be desirable to use a small annular disc which is in face-to-face contact with the piezoelectric element, which is centred on the wire, and through which the wire extends. Again, although the bonding of the wire 46 to the face 40 of the crystal is shown here as being immediately adjacent to the central hole in the crystal, the point of bonding could alternatively be at some other location on the free face 40 of the crystal.

The electrical contact wire 46 is preferably the inner element of a coaxial cable. In addition to the insulating sleeve 50 which encloses the wire 46, the bore 48 through the support 38 is also lined or filled with an electrical insulating material 52. This not only provides the necessary insulation, but also ensures that the electrical contact wire is mounted firmly and protectedly within the support 38. At the outer end of the shaft portion 44 of the support 38 the shaft portion 44 is electrically connected to the earth braid of the coaxial conductor and a suitable tubular element fitted over the conductor can be crimped onto it to ensure a tight connection at this region.

The piezoelectric element 34 of the accelerometer is centre-mounted on the support member 38 with the electrical contact rigidly mounted and extending through the hole in the centre of the piezoelectric element to make contact with the free outer face of the element. As illustrated, the diameter of the support plate 42 is greater than the diameter of the piezoelectric element 34. One factor which has been found to affect the response and sensitivity of the device is the ratio of the diameter of the piezoelectric element 34 to the diameter of the support shaft or post 44.   The preferred ratio is approximately 10 to 3, for maximum response and sensitivity.

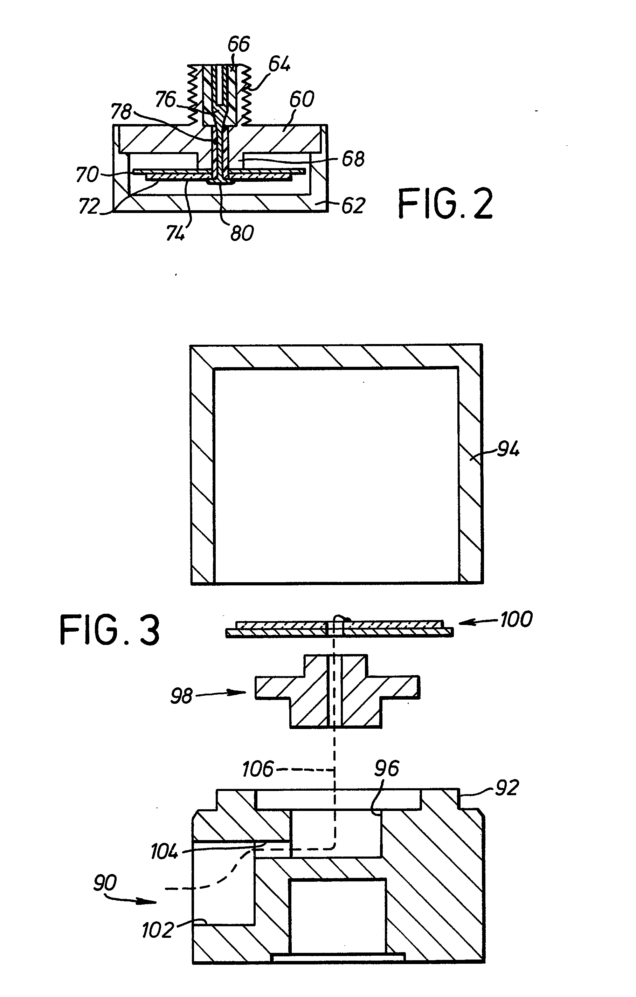

Referring now to Fig. 2, this shows a simplified form of accelerometer which includes a housing comprising a base 60 and a cover 62.   The housing is cylindrical overall.   Integral with the base 60 is a screw-threaded connector boss 64 which is lined internally with an annular electrical insulator 66.   From the face of the base 60 which is remote from the connector 64 there projects a cylindrical support post 68.   Fixedly secured to the outer face of the support post 68 is a metal disc 70 which has a piezoelectric disc 72 bonded to it by any suitable means.   The metal disc 70 for its part is bonded to the support post 68 by glueing, soldering, or any other appropriate method.

Electrical connection to the  free flat outer face 74 of the piezoelectric element 72 is effected by way of a contact 76 which extends axially down through the insulator 66, and through a further annular insulator 78 which extends centrally through the base 60 and through a central hole formed through the metal disc 70 and piezoelectric element 72, terminating in a circular stud 80 which is glued, soldered or otherwise fixedly secured to the free face 74 of the piezoelectric element.

In both of the embodiments described above, the component parts of the accelerometer can be assembled quickly and easily by simple axial movement of the individual elements,  which are then held in place by suitable adhesives or in any other appropriate way.   In each case, the contact element is held rigidly fixed, protected by the components of the accelerometer themselves, and this means that even when the accelerometer is placed in a hostile environment and subjected to considerable

- 9 - 0047660

vibration the joints between the contact element and the piezoelectric element will remain secure.

Fig. 3 shows a third embodiment of accelerometer in accordance with the invention. In this embodiment the electrical connection to the piezoelectric element does not extend axially from the piezoelectric element out of the housing, but is taken radially through the side wall of the housing. Such an arrangement is advantageous for certain applications where it may be inconvenient to have the electrical connection extending axially from the device. The accelerometer base, which is indicated generally at 90, is hexagonal in cross-section and is provided with a peripheral recess 92 at one end which provides a seat for a cylindrical cup-shaped cover 94. The accelerometer base 90 is axially counterbored to provide a recess 96 to receive a support post 98 for the unimorph assembly 100. A radial bore 102 is provided in one side of the base 90, and this communicates by way of a cylindrical passage 104 with the bottom of the counterbored recess 96. The broken line 106 indicates the path of the electrical connection to the free face of the piezoelectric element of the assembly 100, extending axially through the support post 98 and then substantially radially through the accelerometer base 90 to an appropriate connector (not shown) which is fitted into the radial bore 102.

In practice, the electrical connection is suitably supported and insulated in its passage through the support post 98 and base 90, but these elements are not shown in the drawing for the sake of clarity. For ease of manufacture, the accelerometer base 90 may be made in two or more pieces which are then rigidly secured together.

In addition to the various advantages described above for the accelerometer of the present invention, a further important advantage is that by mounting the piezoelectric element on a centre post, particularly with the type of construction shown in Fig. 1, the piezoelectric element itself is relatively unaffected by temperature changes in the test object, because the piezoelectric element is held supported within a chamber and there is a relatively long path from the mounting stud through the accelerometer components to the support plate which carries the crystal. The influence of pyroelectric effects can be further reduced by incorporating ceramic linings within certain ones of the housing portions, in order to slow down the heat conduction through the material of the device.

Nevertheless, in all the embodiments of accelerometer according to the invention it is essential that the piezoelectric element should be mounted so that it functions as a radial expander when subjected to forces exerted in a direction perpendicular to its flat faces.

CLAIMS :

1. An accelerometer comprising a housing and a piezoelectric element which has flat faces on opposite sides thereof and which is mounted within the housing on a support,characterised in that the support comprises a plate (42;70) and the piezoelectric element (34;72) is mounted with one flat face (36) bonded to the plate and the other flat face (40) free so that the piezoelectric element functions as a radial expander when subjected to forces exerted in a direction perpendicular to said faces, and in that electrical connection to the piezoelectric element (34;72) is effected by way of an electrical contact element (46;76) which extends through a hole (48) through the support plate and the piezoelectric element and which is connected to said other flat face (40) of the piezoelectric element remote from the support plate (42;70).

2. An accelerometer as claimed in claim 1, characterised in that the piezoelectric element (34;72) is a circular disc with a hole through its centre.

3. An accelerometer as claimed in claim 1 or 2, characterised in that the support plate (42;70) is electrically conductive and is mounted on or is integral with a central boss (44;68;98) through which the contact element (46;76;106) extends axially.

4. An accelerometer as claimed in claim 3, characterised in that the ratio of the diameter of the piezoelectric element (34;72) to the diameter of the boss (44;68;98) is approximately 10 to 3.

5. An accelerometer as claimed in any preceding claim, characterised in that the diameter of the support plate (42;70) is greater than the diameter of the piezoelectric element (34;72).

6. An accelerometer as claimed in any preceding claim, characterised in that the electrical contact element comprises a wire (46) which has its tip directly connected to the face of the piezoelectric element by soldering, glueing, or like means.

7. An accelerometer as claimed in claim 6, characterised in that the contact wire (46) is enclosed within electrically insulating material within the bore (48) through the support plate and the piezoelectric element.

8. An accelerometer as claimed in any preceding claim, characterised in that the electrical contact element (106) is led out through a side wall of the housing.

9. An accelerometer as claimed in any preceding claim, characterised in that the support plate (42;70) and the piezoelectric element carried thereon are positioned within a chamber defined by at least two housing elements (24, 26; 60,62; 92,94).

10. An accelerometer as claimed in claim 9, characterised in that said chamber is defined by a first cup-shaped housing element (24), a second housing element (26) in the form of an annular plate seated within said first housing element and carrying said support, and a third, cup-shaped housing element (10) within which said first housing element is seated and which includes means (12,14) for mounting the accelerometer on a test object.

FIG.1

212

FIG.2

FIG.3

European Patent Office

**EUROPEAN SEARCH REPORT**

0047660

Application number

EP 81 30 4082

## DOCUMENTS CONSIDERED TO BE RELEVANT

| Category | Citation of document with indication, where appropriate, of relevant passages | Relevant to claim |
|---|---|---|
| D | <u>DE - A - 2 047 387</u> (KISTLER INSTR. CORP.) <br><br> * page 1, line 13 - page 6, line 32; page 9, lines 1-9; figure 1 * | 1-3,5, 9,10 |
| D | <u>GB - A - 1 140 431</u> (KISTLER INSTR. CORP.) <br><br> * page 6, lines 2-94; figure 5 * | 1-3,7, 9,10 |
| D | <u>FR - A - 2 116 922</u> (AGENCE NATIONALE DE VALORISATION DE LA RECHERCHE) <br><br> * page 3, line 4 - page 4, line 4; figures 1,2 * | 1-3,8, 9 |
| D | J. ACOUSTICAL SOCIETY OF AMERICA, vol. 63, no. 2, February 1978, Acoustical Society of America NEW YORK (US) L.E. IVEY et al.:"Reliable piezoelectric ballistic impact detector". pages 627-630. <br><br> * page 630, column 1, lines 17-26; figure 3 * | 1,2,8 |
| D | <u>US - A - 3 612 921</u> (D.L. SPRINGATE) <br><br> * column 3, line 52 - column 4, line 21; figure 1 * | 1-3,9 |

### CLASSIFICATION OF THE APPLICATION (Int. Cl.³)

G 01 P 15/09

### TECHNICAL FIELDS SEARCHED (Int. Cl.³)

G 01 P 15/09
       15/12
G 01 L  1/16
G 01 V  1/16
       1/18

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 20-11-1981 | HANSEN |